# EUROPEAN PATENT APPLICATION

(11) **EP 2 131 298 A1**
(43) Date of publication of application: **09.12.2009**
(21) Application number: 08721079.5
(22) Date of filing: 29.02.2008
(51) Int. Cl.: G06F 17/50, G06T 15/00

(54) **SIMULATION DEVICE AND SIMULATION METHOD OF KNIT PRODUCT**

(30) Priority: 27.03.2007 JP 2007081128
(71) Applicant: Shima Seiki Manufacturing., Ltd., Wakayama-shi, Wakayama 641-0003 (JP)
(72) Inventor: YAMAMOTO, Shinji, Wakayama-shi Wakayama 641-0003 (JP)
(74) Representative: Tomlinson, Kerry John
(86) International application number: PCT/JP2008/053659
(87) International publication number: WO 2008/117629

(57) **Abstract**

A virtual garment is generated based on design data of a knit product. The garment is flatly disposed, and an original picture that is read in is aligned in relation to the garment. Next, a color value of a polygon on a surface of a loop configuring the garment is changed. The garment having the changed color value is three-dimensionally deformed according to a user input (14). A knit product subjected to printing after knitting can be simulated easily.

## Description

The present invention relates to simulation of a knit product.

The applicant has developed a technology for converting design data of a knit product into a 3D simulation image of a garment (Patent Literature 1: Japanese Patent Publication Application No. 2005-242611). In this technology, 3D data of a garment is generated based on design data, which is then rendered and then displayed on a color monitor. The virtual garment obtained in the simulation can be deformed freely by putting it on a human body model, hanging it on a hanger, or by placing it flat.

Incidentally, a knit product can be stained by printing on a knitted knit fabric, dyeing yarn by means of batch processing beforehand, or dyeing yarn on a knitting machine before carrying out knitting. In order to simulate a stained knit product, a knit product without any colored patterns is knitted, image data is read using a CCD camera, a scanner or the like, and an original picture to be used for staining is aligned to perform texture mapping. However, it requires time to knit the knit product and read the image data. Moreover, because the image obtained from the texture mapping is a 2D image, it cannot be deformed three-dimensionally. In the simulation described above, colored patterns are designated by a yarn carrier used for knitting, and thus do not involve printing or yarn dyeing performed before carrying out knitting.
Patent Literature 1: Japanese Patent Publication Application No. 2005-242611

An object of the present invention is to be able to simply simulate a knit product that is subjected to printing after knitting or yarn dyeing before knitting.

A device for simulating a knit product according to the present invention is a device that generates a virtual garment used for simulating a knit product three-dimensionally on the basis of design data of the knit product, and displays a simulation image of the virtual garment on a color monitor, the device being provided with:
deformation means for changing a form of the garment at least between a flatly-disposed state and a three-dimensionally deformed state;
image generation means for generating the simulation image of the garment in accordance with the form of the garment;
means for creating or reading an original picture;
alignment means for aligning the original picture in relation to the simulation image of the garment that is flatly disposed; and
texture mapping means for copying a color value of the original picture to apexes of a polygon on a loop surface in the simulation image corresponding to the flat garment, and interpolating a color value of a peripheral apex between the apexes of the polygon, to thereby change the color value of the polygon in accordance with the original picture.

It is preferred that the texture mapping means copy the color value of the original picture to a control point defining the positions of segments obtained by dividing the loop into the plurality of segments, and copy the color value of the original picture copied to the control point, to the apexes. The position of the control point may be a boundary between the segments, but may be, for example, the center of each segment.
Preferably, the texture mapping means makes a combined ratio between the color value of each apex before copying and the color value of the original picture different in the positions of the apexes with respect to a surface of the garment, in accordance with whether to perform printing after knitting the knit product or yarn dyeing before knitting the knit product.

It is particularly preferred that the combined ratio be changed in accordance with data representing the thickness of a yarn.

A method for simulating a knit product according to the present invention is a method for generating a virtual garment used for simulating a knit product three-dimensionally on the basis of design data of the knit product, and displaying a simulation image of the virtual garment on a color monitor, the method having the steps of:
generating a simulation image expressing a state in which the garment is flatly disposed, and displaying the simulation image on the color monitor;
creating or reading an original picture;
displaying the original picture on the color monitor and aligning the original picture in relation to the simulation image of the garment that is flatly disposed; and
copying a color value of the original picture to apexes of a polygon on a loop surface in the simulation image corresponding to the flat garment, and interpolating a color value of a peripheral apex between the apexes of the polygon, to thereby change the color value of the polygon in accordance with the original picture;
three-dimensionally deforming the garment obtained after changing the color value, in accordance with a user input; and
generating a simulation image expressing the garment that is three-dimensionally deformed, and displaying the simulation image on the color monitor.

According to the present invention, an unpatterned garment obtained by texture-mapping an original picture can be three-dimensionally simulated based on design data, without knitting the garment. Furthermore, the original picture can be texture-mapped easily, by copying a color value of the original picture to an apex of a polygon and interpolating a color value of a peripheral apex between the apexes of the polygon to obtain a color value of the polygon.

By copying the color value of the original picture to the control point for defining the positions of segments obtained by dividing the loop into a plurality of segments, and copying the color value of the original picture copied to the control point, to the apex, high-speed texture mapping can be achieved.
Next, yarn dyeing before knitting and printing after knitting can be simulated by changing the combined ratio between the color value of the apex before copy and the color value of the original picture in the position of the apex corresponding to the garment surface, in accordance with whether the knit product is subjected to printing after knitting or yarn dyeing before knitting.

Moreover, by changing the combined ratio in accordance with the data representing the thickness of a yarn, that is, data representing a count of yarn or the thickness itself of the yarn, it is possible to simulate, by performing printing after knitting, a situation where uniform dyeing cannot be performed due to a thick yarn and a situation where uniform dyeing can be performed due to thin yarn. Similarly, because some yarns are colored easily or hardly colorable, the combined ratio may be set high for the yarns that are colored easily, and low for the yarns that are hardly colorable.

The virtual garment is constituted by string line data or the like in an embodiment of the present invention. Note that in this specification the description of the simulation device applies directly to the simulation method. Conversely, the description of the simulation method applies directly to the simulation device.

Fig. 1 is a block diagram of a simulation device according to an embodiment;
Fig. 2 is a diagram showing an arrangement of loop images according to the embodiment;
Fig. 3 is a diagram showing how the loop image is broken up into segments according to the embodiment;
Fig. 4 is a diagram showing the apexes of each segment according to the embodiment;
Fig. 5 is a diagram showing a blend ratio of each apex of the segment according to the embodiment;
Fig. 6 is a flowchart according to the embodiment;
Fig. 7 is a flowchart showing a determination algorithm of the blend ratio;
Fig. 8 is a flowchart of texture mapping according to the embodiment; and
Fig. 9 is a diagram schematically showing the texture mapping according to the embodiment.

- 2: Simulation device
- 4: General purpose bus
- 6: Image bus
- 8: Color monitor
- 10: Color printer
- 12: Knit design part
- 14: User input
- 16: Data converter
- 18: Disk drive
- 20: LAN interface
- 22: General purpose CPU
- 24: String line data memory
- 26: Original picture data memory
- 28: Model data memory
- 30: Apex data memory
- 32: GPU
- 34: Graphic memory
- 36: Frame buffer
- C1, C2: Control points
- P1 to P10: Apexes

The best mode for carrying out the present invention will be described hereinafter, but the present invention is not limited to this mode.

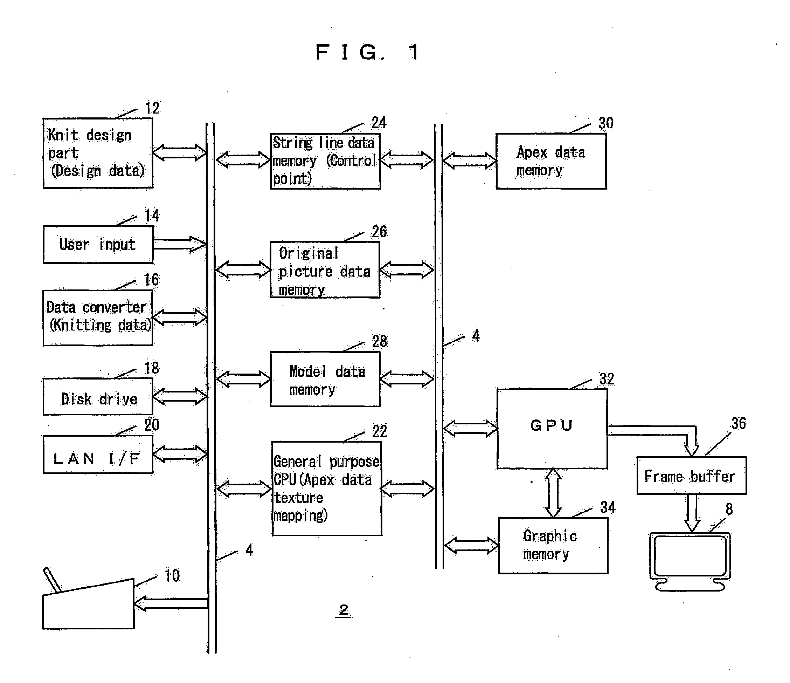

Figs. 1 to 9 show a simulation device 2 and simulation method of an embodiment. In the diagrams, reference numeral 4 represents a general purpose bus, 6 an image bus, 8 a color monitor, and 10 a color printer. Reference numeral 12 represents a knit design part for creating design data of a knit product, and reference numeral 14 represents user input, such as a keyboard, stylus, mouse and trackball. A data converter 16 converts design data created by the knit design part 12, to knitting data used by a knitting machine, such as a weft knitting machine. A disk drive 18 reads and writes data from and to a disk, such as a CD-ROM. A LAN interface 20 exchanges data and programs with a LAN, which is not shown.

Reference numeral 22 represents a general purpose CPU used for simulating the knit product and particularly for generating data on control points of segments and apex data of a polygon which are used in simulation of the knit program. The apex data is configured by a three-dimensional coordinate, opacity, a color value of an apex, and the like. The control points will be described hereinafter in detail. In the embodiment, a plurality of the control points are provided in a loop and connected by segments. The positions or orientations of the segments are defined by the control points. A model that has a polygon on a surface of each segment is used. The general purpose CPU 22 also texture-maps an original picture with respect to the control points and apexes of the polygon. A string line data memory 24 stores stitch data that is based on knitting data obtained by the data converter 16 and string line data that is converted for simulating the stitch data. The stitch data describes a stitch number, a stitch type, and a connection relationship between the peripheral stitches, for each stitch contained in the knit product. The stitch number is applied regularly in accordance with a knitting course and represents the position of a stitch in the knit product.

String line data expresses the stitch data in further detail, wherein one stitch is broken up into a plurality of segments as described above, and the position of each segment is stored based on a 3D coordinate of the control point on each end of the segment. When the 3D coordinates of the control points are changed, the position, orientation, length and the like of the segment changes, which eventually changes the position, orientation, form and the like of the stitches. Further, the position representative of a stitch, that is, the 3D coordinate of the center of the stitch, is included in both the stitch data and the string line data or only in the string line data. The stitch data or yarn string data having the 3D position of the stitch expresses a virtual garment, and changing the form of the virtual garment means changing the 3D position of the stitch. When the general purpose CPU 22 changes the central position of the stitch or the position of each control point, the form of the virtual garment is changed. The general purpose CPU 22 is an example of the deformation means.

An original picture data memory 26 stores original picture data of the original picture used for printing or performing yarn dyeing on the knit product. A model data memory 28 stores data of a model such as a human body model on which the knit product is put, the knit product being subjected to coloring by carrying out yarn dyeing or printing thereon.

An apex data memory 30 stores apex data obtained by the general purpose CPU 22. The contents of the apex data are the 3D coordinate, color value, and opacity of the apex. A graphic processor unit (GPU) 32 performs 3D image processing using the apex data. For example, the GPU 32 interpolates the peripheral apex data between the positions of apexes, and calculates the color values and opacity for these positions. The GPU 32 also calculates overlapping two polygons when the polygons overlap on each other in the depth direction viewed from a viewpoint, and applies shading and the like on the polygons. The obtained 3D image is stored in the graphic memory 34, and the GPU 32 converts the 3D simulation data to a 2D image to display it on the color monitor 8, and transmits the 2D image to a frame buffer 36. The GPU 32 generates simulation images, and the GPU 32 is an example of image generation means.

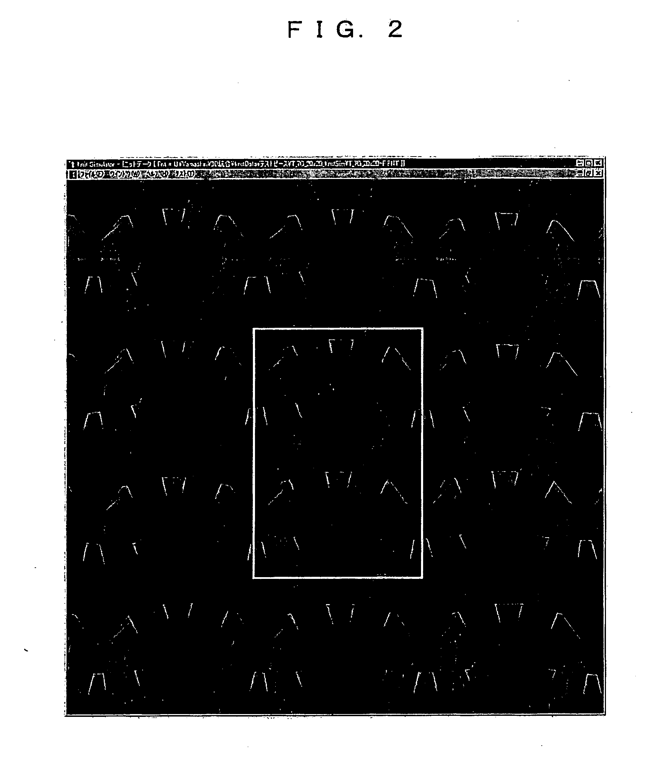

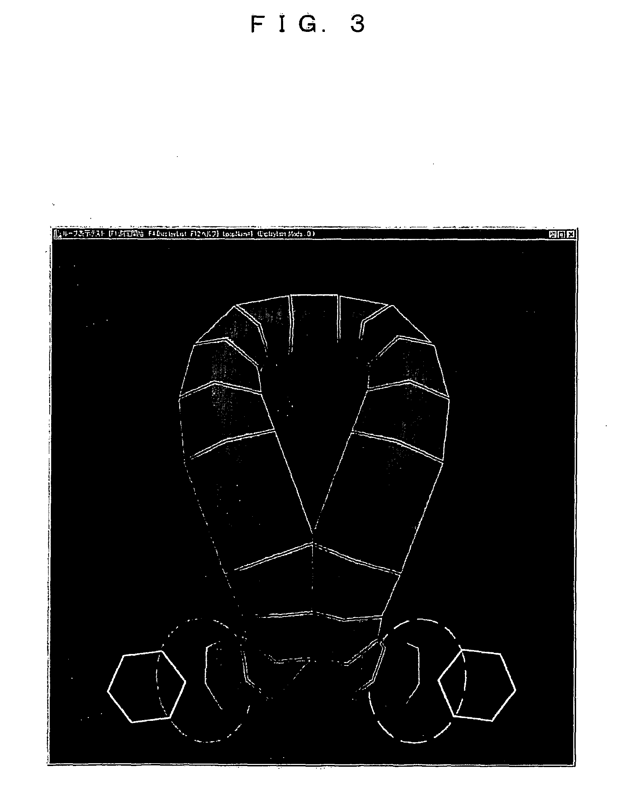

Fig. 2 shows an arrangement of simulating loops, and Fig. 3 shows how each loop is broken up into segments. In Fig. 3, one of the loops arranged in Fig. 2 is enlarged and broken into segments. One loop is broken into a plurality of segments, wherein the cross section of each segment is in a polygonal shape, such as a hexagonal shape in this example, and the segment is in the shape of, for example, a hexagonal prism.

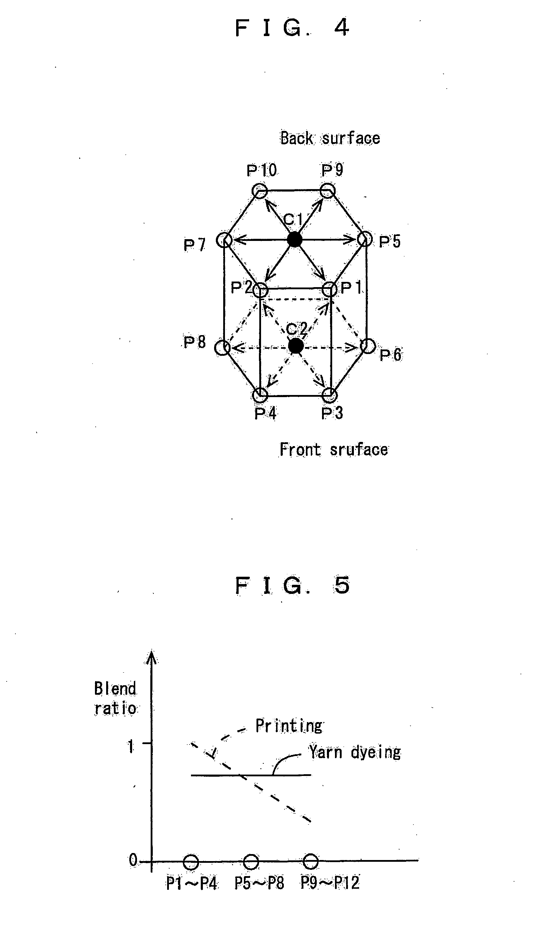

Fig. 4 shows control points C1, C2 between segments and the apexes of one segment. The control points C1, C2 exist in the center of the top surface and bottom surface of a hexagonal prism segment, and the control points C1, C2 represent boundaries between the segments. The hexagonal prism segment has a total of twelve apexes, wherein P1 to P4 are the apexes on the front surface, P9 to P10 the apexes on the back surface, and P5 to P8 the apexes on the side surfaces. Note that the front surface and the back surface indicate the directions in which the knitted fabric is viewed. When the knitted fabric is in a tubular shape, the external side of the tubular corresponds to the front surface and the internal part of the cylinder corresponds to the back surface.

When texture mapping is carried out, the color value of the original picture are mapped (copied) to the control points. Next, the color values of the control points are copied to the apexes in the same plain. For example, the color value of the control point C1 shown in Fig. 4 is copied to the apexes P1, P2, P5, P7, P9 and P10. By mapping the original picture to the control point and thereafter copying it picture to the apexes, the number of points to be mapped can be reduced to 1/6. Accordingly, the number of times to acquire the color value of the original picture and write it to the address of a copy destination can be reduced, whereby the speed of texture mapping can be increased. Because copying the color value from the control point to the apexes is performed between the points of the same segment, address calculation can be carried out easily, and the processing can be performed at high speed. As described above, by copying the color value of the original picture to the control points and then copying the color values from the control points to the apexes of the segment, texture mapping can be carried out at high speed. However, the color value of the original picture may be copied directly to the apexes of the segment.

A blend ratio β for copying the color value of each control point is defined for the apexes P1 to P10. The blend ratio β is a blend ratio between the color value of each apex before texture mapping is performed and the color value of the control point. When the blend ratio β is 1, the color value of the original picture is 100% effective, and when the blend ratio β is 0, the color value of each apex before mapping is performed is 100% effective. When the color value is copied, the color value α of each apex obtained after copying is obtained by α = (1 - β)α2 + β x α1, where the color value of the control point is α1 and the color value of each apex before copying is α2.

The blend ratio β can be set to a constant value and the color value to be copied can be changed to change an apparent blend ratio. For example, in printing that will be described hereinafter, the color value acquired by the control point is blended directly for the apexes on the front surface of the segment. The color value acquired by the control point is weakened and blended for the apexes on the back surface of the segment, and the color value is slightly weakened and blended for the apexes on the side surfaces. In order to weaken the color value, when the color value is expressed by H (hue), L (brightness) and S (color saturation) the color saturation is lowered, or when the color value of each apexes before copying represents a constant ground color, the color value of the apex may be made similar to the ground color. In this specification, actually changing the blend β and changing the color value to be copied from the control point both mean changing the blend ratio.

Here, yarn dyeing means dyeing a yarn in accordance with the color pattern of the knit fabric. Yarn dyeing is performed immediately prior to knitting using, for example, a knitting machine, such that a desired dye is applied to a desired position on the knit product. In yarn dyeing, a dye is applied substantially uniformly along the cross-sectional direction of the yarn. In printing, the knit product is knitted using, for example, white yarn and the knitted knit product is printed using an inkjet printer or the like. In this case, the apexes P1 to P4 on the front surface of the segment has a high blend ratio, and the apexes P9, P10 and the like on the back surface have a low blend ratio. Furthermore, in printing, use of a thick yarn tends to reduce the dyeing ratio, but use of a thin yarn tends to increase the dyeing ratio. In addition, in printing, use of a pigment to perform printing reduces the fluidity thereof, thereby reducing the blend ratio on the back surface side. On the other hand, use of a dye to perform printing tends to increase the blend ratio on the back surface side. The blend ratio on each apex can be specified freely by a user in accordance with the thickness or material of the yarn, the type of the ink, and so on.

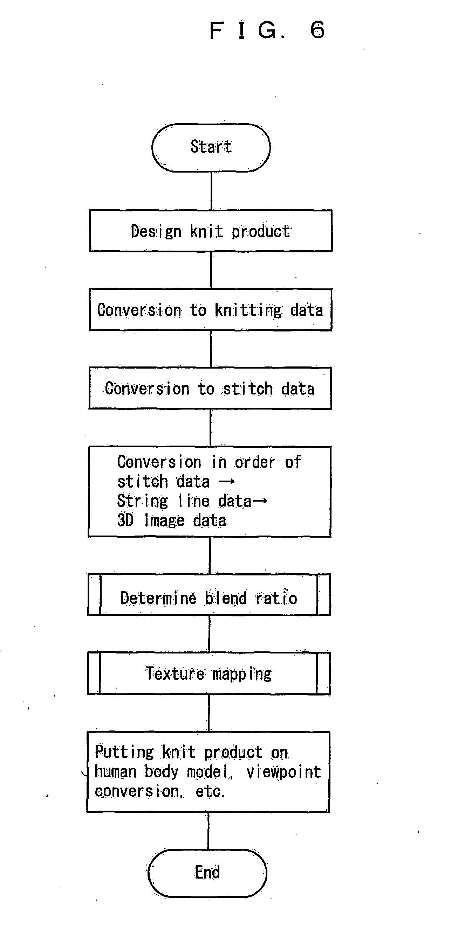

Fig. 6 shows a simulation algorithm according to the embodiment. The user designs the knit product and converts it to knitting data by means of the data converter. Next, the user converts the knitting data to stitch data by using the general purpose CPU, converts the stitch data to string line data, further converts the string line data in the order of 3D image data, and displays the 3D image data on the color monitor. Subsequently, the user executes a sub-routine for determining the blend ratio. The user also executes a sub-routine of texture mapping. When carrying out texture mapping, the virtual garment obtained through simulation is put on the human body model or the like or is subjected to viewpoint conversion or other processing. Thus obtained garment is displayed on the color monitor 8 and printed by the color printer 10. In this manner, the 3D simulation image or color print of the obtained knit product is taken as a virtual sample.

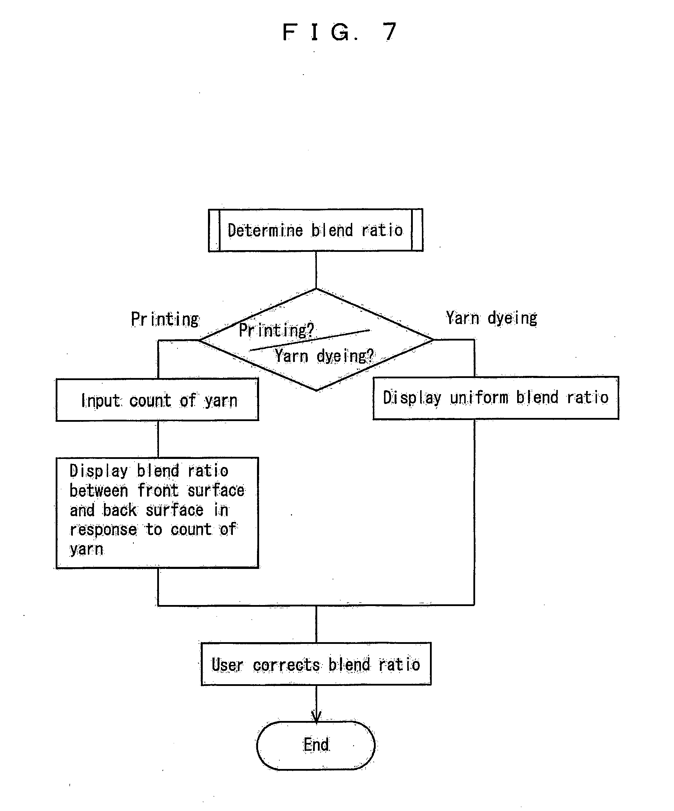

Fig. 7 shows a determination algorithm of the blend ratio. The user specifies from the user input whether to perform printing of yarn dyeing, or reads from the design data to perform either printing or yarn dyeing. When printing, the user is required to input data on a count of yarn such as yarn thickness, or the count of yarn or the like is read from the design data. Then, default values of the blend ratios of the front surface and back surface that correspond to the data on the count of yarn such as data thickness are displayed on the color monitor. Note that the default values of the blend ratios are changed in accordance with whether use of a dye or pigment is specified by the user input or design data. When yarn dyeing is performed, the yarn is provided with a blend ratio that is uniform along the cross-sectional direction of the yarn, and the default value of the blend ratio is displayed on the color monitor. In the case of both printing and yarn dyeing, the user can correct the blend ratio displayed on the color monitor. As a result, the blend ratio for each apex can be determined.

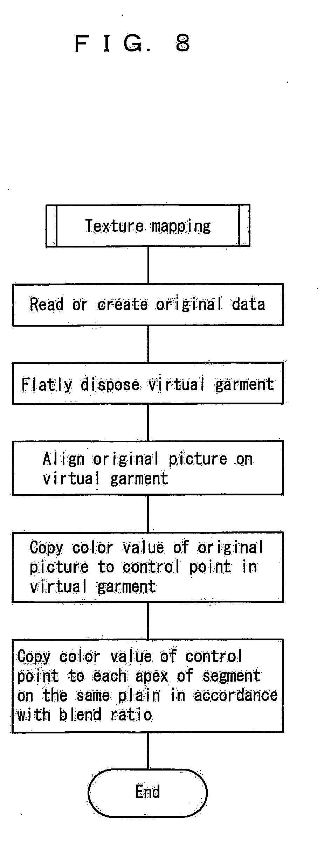

Fig. 8 shows an algorithm of texture mapping. The original picture data is read by input means such as a scanner, or the original picture data is created or edited appropriately. The virtual garment obtained by simulation is flatly disposed. Next, the original picture is aligned in relation to the virtual garment by the user input 14 or the like, and at this moment whether to map the original picture on the front side or the rear side of the garment can be selected. For example, when the garment is in the shape of a tubular knitted fabric, the user can select whether to map the original picture on the front knitted fabric or the rear knitted fabric. Furthermore, the user can specify which section of the original picture is mapped where on the garment. The color value of the original picture is texture-mapped onto the control points of the virtual garment.

The color value of the original picture that is copied to the control points and the color value of each apex obtained before dyeing are blended together in accordance with the blend ratio of each apex of a segment. Once the color value of each apex of the segment is determined, the color value for each position on the surface of the segment is determined by interpolating the color values of peripheral apexes. Also, during the alignment step, the user can freely move the positions on the original picture in relation to the virtual garment, and can also shrink/enlarge, rotate, projection-converts, or correct the original picture. In addition, the user can specify a part of the original picture and perform texture mapping thereon.

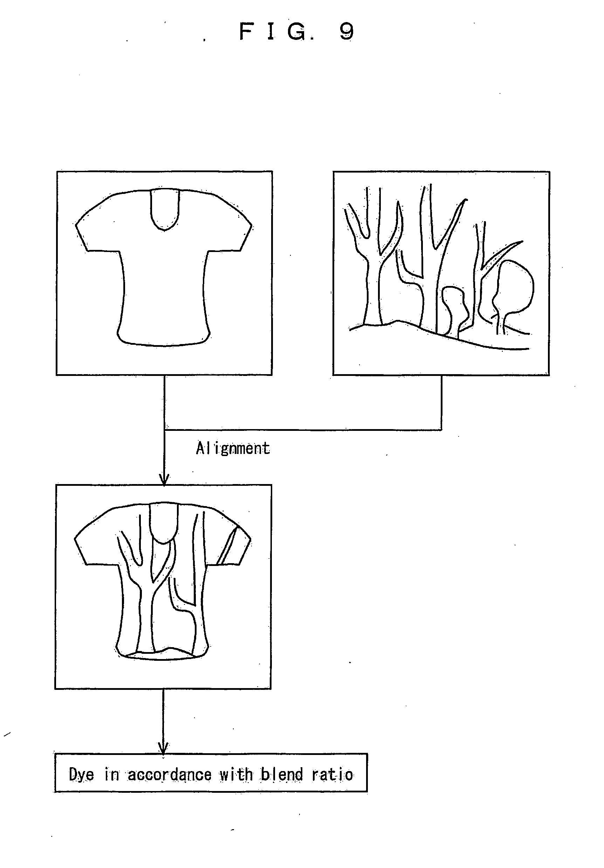

Fig. 9 schematically shows the texture mapping according to the embodiment. The virtual knit product is flatly disposed, the simulation image thereof and the original picture image are displayed on the color monitor, the original picture is aligned in relation to the simulation image in accordance with a user input, and the texture mapping is performed. During the alignment step, the original picture can be reduced/enlarged, rotated or corrected, and an area to be copied can be specified within the original picture. Then, each polygon of the simulation image is dyed in accordance with the blend ratio so as to copy the color value of the original picture. The simulation image that is subjected to dyeing is displayed on the color monitor, and a user input regarding whether to confirm or change texture mapping is received.

The embodiment can achieve the following effects:
(1) A knit product obtained by texture-mapping an original picture can be simulated. Only the design data of the knit product and the data of the original picture are required to perform the simulation, and it is not necessary to knit a knitted product.
(2) Whether a yarn is uniformly dyed in a cross-sectional direction thereof or the concentration difference is generated between a dye on the front surface and a dye on the back surface can be specified based on the blend ratio. As a result, yarn dyeing and printing can be simulated.
(3) Because a default value is prepared in the blend ratio, the specification can be performed easily. The user can change the blend ratio based on the default value, whereby the difference in the dyes or pigments can be reflected in the simulation.
(4) The default value of the blend ratio is changed based on the thickness of the yarn. Therefore, the situation in which uniform printing cannot be performed with a thick yearn and a situation where uniform printing can be performed with a thin yarn can be reflected in the simulation.
(5) By copying the original picture on the apexes via the control points, the texture mapping can be executed at high speed.

The embodiment has illustrated how dyeing is performed, but discharge dyeing may be applied to the embodiment. In this case, the apexes of the virtual knit product have color values corresponding to colors other than white before the texture mapping is performed, and the color values are made similar to white by employing discharge dyeing. Furthermore, colored discharge printing is also possible, wherein, for example, an area to be subjected to the texture mapping in a simulation image is converted into a white color or a color similar to white to simulate discharge dyeing, and then the original picture is texture-mapped to the area converted to a white color or the like.

## Claims

1. A device (2) for simulating a knit product, which generates a virtual garment used for simulating a knit product three-dimensionally on the basis of design data of the knit product, and displays a simulation image of the virtual garment on a color monitor (8), the device (2) comprising:
deformation means for changing a form of the garment at least between a flatly-disposed state and a three-dimensionally deformed state;
image generation means for generating the simulation image of the garment in accordance with the form of the garment;
means for creating or reading an original picture;
alignment means for aligning the original picture in relation to the simulation image of the garment that is flatly disposed; and
texture mapping means for copying a color value of the original picture to apexes (P1 to P10) of a polygon on a loop surface in the simulation image corresponding to the flat garment, and interpolating a color value of a peripheral apex between the apexes (P1 to P10) of the polygon, to thereby change the color value of the polygon in accordance with the original picture.

2. The device (2) for simulating a knit product according to claim 1, **characterized in that** the texture mapping means copies the color value of the original picture to a control point (C1, C2) defining the positions of segments obtained by dividing the loop into a plurality of segments, and copies the color value of the original picture copied to the control point (C1, C2), to the apexes (P1 to P10).

3. The device (2) for simulating a knit product according to claim 1, **characterized in that** the texture mapping means makes a combined ratio between the color value of each apex (P1 to P10) before copying and the color value of the original picture different in the positions of the apexes (P1 to P10) with respect to a surface of the garment, in accordance with whether to perform printing after knitting the knit product or yarn dyeing before knitting the knit product.

4. The device (2) for simulating a knit product according to claim 3, **characterized in that** the combined ratio is changed in accordance with data representing a thickness of a yarn.

5. A method for simulating a knit product for generating a virtual garment used for simulating a knit product three-dimensionally on the basis of design data of the knit product, and displaying a simulation image of the virtual garment on a color monitor (8), the method comprising the steps of:
generating a simulation image expressing a state in which the garment is flatly disposed, and displaying the simulation image on the color monitor (8);
creating or reading an original picture;
displaying the original picture on the color monitor (8) and aligning the original picture in relation to the simulation image of the garment that is flatly disposed; and
copying a color value of the original picture to apexes (P1 to P10) of a polygon on a loop surface in the simulation image corresponding to the flat garment, and interpolating a color value of a peripheral apex between the apexes (P1 to P10) of the polygon, to thereby change the color value of the polygon in accordance with the original picture;
three-dimensionally deforming the garment obtained after changing the color value, in accordance with a user input (14); and
generating a simulation image expressing the garment that is three-dimensionally deformed, and displaying the simulation image on the color monitor (8).
